# EUROPÄISCHE PATENTSCHRIFT

(11) **EP 1 655 503 B1**
(45) Veröffentlichungstag und Bekanntmachung des Hinweises auf die Patenterteilung: **08.08.2007**
(21) Anmeldenummer: 05021754.6
(22) Anmeldetag: 06.10.2005
(51) Int. Cl.: F16D 23/02

(54) **Bauteil für eine Synchronisationseinrichtung und Verfahren zu seiner Herstellung**
Component for a synchromesh device and its manufacturing method
Pièce détachée pour un dispositif de synchronisation et un procédé de sa fabrication

(30) Priorität: 03.11.2004 DE 102004053000
(43) Veröffentlichungstag der Anmeldung: 10.05.2006
(73) Patentinhaber: AB SKF, S-415 03 Göteborg (SE)
(72) Erfinder: Buchheim, Burkhard, 97422 Schweinfurt (DE); Helfrich, Thomas, 97456 Dittelbrunn-Hambach (DE); Kempf, Martin, 78570 Mühlheim (DE); Ribault, Patrice, 37210 Vouvray (FR)
(74) Vertreter: Kohl, Thomas

(56) Entgegenhaltungen:
- EP-A- 1 429 044
- FR-A- 1 521 621
- PATENT ABSTRACTS OF JAPAN Bd. 012, Nr. 227 (M-713), 28. Juni 1988 (1988-06-28) & JP 63 023049 A (TOYOTA MOTOR CORP), 30. Januar 1988 (1988-01-30)
- PATENT ABSTRACTS OF JAPAN Bd. 010, Nr. 193 (M-496), 8. Juli 1986 (1986-07-08) & JP 61 038223 A (TOYOTA MOTOR CORP; others: 01), 24. Februar 1986 (1986-02-24)
- PATENT ABSTRACTS OF JAPAN Bd. 017, Nr. 263 (M-1415), 24. Mai 1993 (1993-05-24) & JP 05 001723 A (NIPPON PISTON RING CO LTD; others: 01), 8. Januar 1993 (1993-01-08)

## Beschreibung

Die Erfindung betrifft ein Bauteil für eine Synchronisationseinrichtung für ein Getriebe, insbesondere für ein Kraftfahrzeuggetriebe, das eine Reibfläche aufweist, die zum Zusammenwirken mit der Reibfläche eines anderen Bauteils der Synchronisationseinrichtung ausgebildet ist, insbesondere einen Synchronzwischenring. Des weiteren betrifft die Erfindung ein Verfahren zur Herstellung eines solchen Bauteils.

Synchronringe werden in Synchronisationseinrichtungen, insbesondere für Kraftfahrzeuggetriebe, in mannigfaltiger Weise eingesetzt. Sie kommen als Außen-Synchronring, als Innen-Synchronring oder als Synchronzwischenring zum Einsatz. Zumeist ist bei einem Außen-Synchronring an der inneren Mantelfläche und beim Innen-Synchronring an der äußeren Mantelfläche eine Reibfläche ausgebildet; im Falle des Synchronzwischenrings für eine Mehrfach-Synchronisiereinrichtung befindet sich sowohl an der inneren als auch an der äußeren Mantelfläche eine Reibfläche. Um das Reibverhalten zu optimieren und zum Einsatz in einer Synchronisationseinrichtung tauglich zu machen, werden die Reibpaarungen einander zugeordneter Synchronringe zumeist durch Zusammenwirken einer beschichteten und einer unbeschichteten Reibfläche gebildet. Dabei ist die beschichtete Reibfläche mit einem Reibbelag versehen, der beispielsweise aus einem Sinterwerkstoff oder einem Papierwerkstoff gebildet wird und der auf der Oberfläche des Synchronrings aufgebracht wird.

Synchronringe der gattungsgemäßen Art sind beispielsweise in der DE 198 58 987 A1 offenbart.

Aus der FR-A 1 521 621 ist ein Fertigungsverfahren für einen Synchronisationsring bekannt, bei dem der durch spanende Vorbearbeitung hergestellte Ring einer Kugelstrahloperation unterzogen wird. Damit soll erreicht werden, dass die Oberfläche des Rings eine gewisse Rauheit hat, die bei einem Wert von etwa 12 µm liegen soll. Auch bei der Lösung gemäß der JP 63-023049 A wird ein Synchronisationsring einem Kugelstrahlvorgang ausgesetzt, um eine vorher bestimmte Oberflächenrauheit zu erreichen. Dasselbe gilt für die JP 61-038223 A.

Die JP 05-001723 A schlägt für die Behandlung der Oberfläche eines Synchronisationsrings das Flammspritzen eines Oberflächenfilms vor. Angestrebt wird dabei eine Oberflächenrauheit mit einem R_{Z}-Wert zwischen 20 und 60 µm.

Aus der EP-A 1 429 044 geht ein Verfahren zum Herstellen eines im Bereich einer Lagerfläche mit einem reibungsmindernden Belag beschichteten Gegenstandes hervor. Vorgesehen ist hier, dass auf eine zu behandelnde und durch spanende Bearbeitung vorbereitete Oberfläche ein organischer Belag aufgebracht wird, der zunächst in nicht ausgehärtetem Zustand vorliegt; anschließend erfolgt ein Erwärmen des Belags unter Ausübung eines zur Oberfläche des Gegenstandes gerichteten Drucks, wodurch der Belag zunächst erweicht, um auf der Oberfläche des Gegenstandes Unebenheiten auszugleichen. Abschließend erfolgt ein Aushärten des Belags.

Wenngleich das Reibverhalten der sich im Kontakt befindlichen Synchronisationselemente durch die genannten Maßnahmen bereits relativ gut ist, besteht der Wunsch, es dahingehend zu verbessern, dass sich beim Schaltvorgang zwei in Kontakt befindliche Reibflächen möglichst schnell und lastfrei lösen lassen. Bislang werden Synchronzwischenringe nach dem Drehen und Härten geschliffen und anschließend gehont. Dadurch entsteht eine hinsichtlich des genannten Ziels ungünstige Oberflächenstruktur. Es kommt zu einem relativ hohen Losreißmoment der Reibpartner, was sich beim Schalten nachteilhaft bemerkbar macht.

Der Erfindung liegt daher die **Aufgabe** zugrunde, ein Bauteil für eine Synchronisationseinrichtung der eingangs genannten Art so weiterzubilden, dass die genannten Nachteile vermieden werden, d.h. es soll zu einem verbesserten und möglichst lastfreien Lösen zweier Synchronisationselemente kommen, die sich vor dem Schaltvorgang im Eingriff befinden. Des weiteren soll ein Verfahren zur Herstellung derartiger Bauteile vorgeschlagen werden.

Die **Lösung** dieser Aufgabe durch die Erfindung ist hinsichtlich des Bauteils für eine Synchronisationseinrichtung für ein Getriebe dadurch gekennzeichnet, dass die Reibfläche des Bauteils eine isotrope gleitgeschliffene Oberfläche aufweist.

Unter Isotropie ist in diesem Zusammenhang zu verstehen, dass sich die Oberflächencharakteristika nicht in Abhängigkeit der Richtung ändern, in der sie bestimmt werden. Unabhängig von der Orientierung soll die Oberfläche also eine gleiche Topographie aufweisen. Dies ist im Stand der Technik nicht der Fall, da durch die Schleif- bzw. Hon-Operationen auf der Reiboberfläche eine Orientierung eingearbeitet wird.

Weiterhin ist bevorzugt vorgesehen, dass die Rautiefe der Oberfläche der Reibfläche zwischen Rₐ = 0,1 µm und Rₐ = 0,6 µm liegt. Sie liegt bevorzugt in einem Bereich zwischen 0,15 µm und 0,4 µm. Ein anderer bevorzugter Wertebereich der Rautiefe liegt zwischen 0,1 µm und 0,3 µm.

Das Verfahren zur Herstellung eines Bauteils, insbesondere eines Synchronzwischenrings, für eine Synchronisationseinrichtung für ein Getriebe zeichnet sich dadurch aus, dass folgende Bearbeitungsschritte vorgesehen sind:
a) Drehen der Reibfläche,
b) Härten der Reibfläche und
c) abschließendes Gleitschleifen der Reibfläche.

Alternativ zu obigem Schritt a) kann auch vorgesehen werden, dass die Reibfläche durch Tiefziehen und/oder Stanzen erzeugt wird.

Vorzugsweise wird das Gleitschleifen solange durchgeführt, bis die Rautiefe der Oberfläche der Reibfläche zwischen den obengenannten Werten liegt.

Weiterhin ist bevorzugt vorgesehen, dass die Gleitschleifoperation den letzten Bearbeitungsvorgang der Reibfläche bildet und keine weiteren Vorbearbeitungsvorgänge als das Drehen und das Härten erfolgen.

Mit dem erfindungsgemäßen Vorschlag wird erreicht, dass sich eine Oberflächenstruktur auf den Reibflächen ausbildet, die sich durch ein besonders geringes Verhaken der Spitzen des "Oberflächengebirges" auszeichnet, was in der Folge zu einem verbesserten Lösen zweier Reibpartner in einer Synchronisationseinrichtung führt.

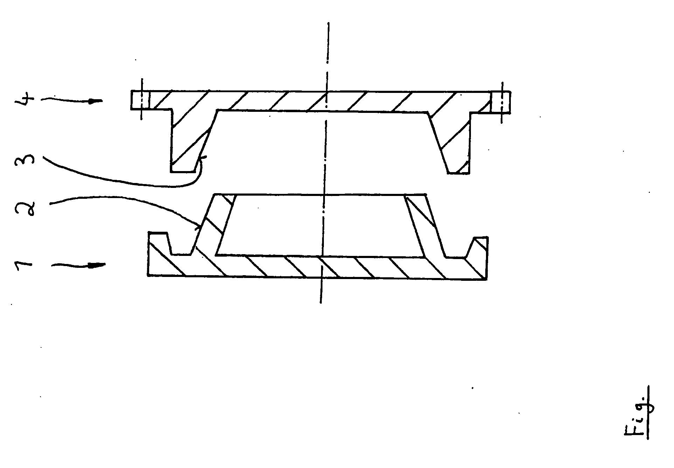

In der Zeichnung ist ein Ausführungsbeispiel der Erfindung dargestellt. Die einzige Figur zeigt im Schnitt einen Synchronzwischenring, der mit einem Gegenring zusammenarbeitet.

Der Synchronzwischenring 1 sowie der Gegenring 4 sind Bestandteile einer Synchronisationseinrichtung, die nicht weiter dargestellt ist. Beide Ringe 1, 4 haben Reibflächen 2 und 3, die beim Synchronisationsvorgang zusammenwirken.

Zumindest eine der Reibflächen 2, 3, vorzugsweise beide Reibflächen, weisen eine isotrope Oberfläche auf. Diese ist durch einen Gleitschleifvorgang erzeugt.

Bei der Fertigung werden die Reibflächen 2, 3 zunächst in klassischer Weise durch Drehen hergestellt, woran sich ein Härteprozess anschließt. Nach dem Härten erfolgt ein Gleitschleifen der Reibflächen 2, 4, bis die Rautiefe Rₐ einen Wert zwischen 0,1 µm und 0,3 µm aufweist. Eine weitere Bearbeitung, abgesehen von der Abfolge Drehen - Härten - Gleitschleifen, erfolgt nicht. Beim vorgeschlagenen Gleitschleifen handelt es sich um ein auf chemischmechanischer Basis arbeitendes Verfahren, mit dem die Reibflächen 2, 3 fertig bearbeitet werden können. Dabei werden Schleifkörper (Chips) und das zu bearbeitende Werkstück in einem Arbeitsbehälter in eine Relativbewegung zueinander gebracht. Dem Prozess wird Wasser und ein Compound beigesetzt, die die Oberflächenbearbeitung beeinflussen.

Der Materialabtrag vom zu bearbeitenden Werkstück, das Oberflächenbild sowie die Oberflächenrauhigkeit hängen von der Zusammensetzung und der Größe der Schleifkörper (Chips) ab. Auch maschinentechnische Faktoren beeinflussen den Materialabtrag, namentlich der spezifische Schleifdruck, der auf das Werkstück ausgeübt wird.

Als Schleifkörper (Chips) können keramisches Material, Stahl, Stein oder Kunststoff eingesetzt werden. Als Compounds, d.h. als Behandlungsmittellösung, sind wässrige Chemikalien-Lösungen bekannt, die den entstehenden Abrieb sowie Öl und Schmutz binden und gleichzeitig selber am Bearbeitungsvorgang teilnehmen. Der Abtrag von Werkstoff vom zu bearbeitenden Werkstück erfolgt beim Gleitschleifen mit den erwähnten Schleifkörpern oder Schleifmitteln, die dem Bearbeitungsbehälter zumeist im Verhältnis zum Volumen der zu bearbeitenden Werkstücke von 3 : 1 bis 8 : 1 zugegeben werden. Dieses Volumenverhältnis der Schleifkörper zu den zu bearbeitenden Werkstücken verhindert die gegenseitige Berührung der Teile, was eine schonende Behandlung zur Folge hat.

Zum Gleitschleifen sind entsprechende Maschinen bekannt, die Trommeln, Glocken bzw. Vibratoren einsetzen, wobei häufig auch auf die Fliehkraft einer rotierenden Trommel eingesetzt wird. Zum Stand der Technik beim Gleitschleifen wird exemplarisch auf die DE 42 36 095 A1 hingewiesen, die eine Fliehkraft-Gleitschleifmaschine offenbart und beschreibt.

Der Einsatz des Gleitschleifverfahrens als solches ist im Stand der Technik beschrieben, wozu auf die DE 197 04 633 C1**,** die DE 102 09 264 A1 und die DE 102 16 492 A1 hingewiesen wird.

### Bezugszeichenliste

- 1: Bauteil (Synchronzwischenring)
- 2: Reibfläche
- 3: Reibfläche
- 4: Bauteil (Gegenring)

## Patentansprüche

1. Bauteil (1) für eine Synchronisationseinrichtung für ein Getriebe, insbesondere für ein Kraftfahrzeuggetriebe, das eine Reibfläche (2) aufweist, die zum Zusammenwirken mit der Reibfläche (3) eines anderen Bauteils (4) der Synchronisationseinrichtung ausgebildet ist, insbesondere Synchronzwischenring,
**dadurch gekennzeichnet,**
**dass** die Reibfläche (2) eine isotrope, gleitgeschliffene Oberfläche aufweist.

2. Bauteil nach Anspruch 1, **dadurch gekennzeichnet, dass** die Rautiefe der Oberfläche der Reibfläche (2) zwischen Rₐ = 0,1 µm und Rₐ = 0,6 µm liegt.

3. Bauteil nach Anspruch 2, **dadurch gekennzeichnet, dass** die Rautiefe der Oberfläche der Reibfläche (2) zwischen Rₐ = 0,15 µm und Rₐ = 0,4 µm liegt.

4. Verfahren zur Herstellung eines Bauteils (1), insbesondere eines Synchronzwischenrings, für eine Synchronisationseinrichtung für ein Getriebe, insbesondere für ein Kraftfahrzeuggetriebe, mit dem eine Reibfläche (2) des Bauteils (1) bearbeitet wird, die zum Zusammenwirken mit der Reibfläche (3) eines anderen Bauteils (4) der Synchronisationseinrichtung ausgebildet ist, wobei zunächst ein Drehen der Reibfläche (2) und anschließend ein Härten der Reibfläche (2) erfolgt,
**gekennzeichnet durch**
ein abschließendes Gleitschleifen der Reibfläche (2).

5. Verfahren zur Herstellung eines Bauteils (1), insbesondere eines Synchronzwischenrings, für eine Synchronisationseinrichtung für ein Getriebe, insbesondere für ein Kraftfahrzeuggetriebe, mit dem eine Reibfläche (2) des Bauteils (1) bearbeitet wird, die zum Zusammenwirken mit der Reibfläche (3) eines anderen Bauteils (4) der Synchronisationseinrichtung ausgebildet ist, wobei zunächst ein Herstellen der Reibfläche (2) durch Tiefziehen und/oder Stanzen und anschließend ein Härten der Reibfläche (2) erfolgt,
**gekennzeichnet durch**
ein abschließendes Gleitschleifen der Reibfläche (2).

6. Verfahren nach Anspruch 4 oder 5, **dadurch gekennzeichnet, dass** zwischen dem Härten der Reibfläche (2) und dem abschließenden Gleitschleifen der Reibfläche (2) ein Schleifen der Reibfläche (2) erfolgt.

7. Verfahren nach einem der Ansprüche 4 bis 6, **dadurch gekennzeichnet, dass** das Gleitschleifen so lange durchgeführt wird, bis die Rautiefe der Oberfläche der Reibfläche (2) zwischen Rₐ = 0,1 µm und Rₐ = 0,6 µm liegt.

8. Verfahren nach Anspruch 7, **dadurch gekennzeichnet, dass** das Gleitschleifen so lange durchgeführt wird, bis die Rautiefe der Oberfläche der Reibfläche (2) zwischen Rₐ = 0,15 µm und Rₐ = 0,4 µm liegt.

9. Verfahren nach einem der Ansprüche 4 oder 6 bis 8, **dadurch gekennzeichnet, dass** die Gleitschleifoperation den letzten Bearbeitungsvorgang der Reibfläche (2) bildet und keine weiteren Vorbearbeitungsvorgänge als das Drehen und das Härten erfolgen.

## Claims

1. A component (1) for a synchronising device for a transmission, in particular for a motor vehicle transmission, which component has a friction surface (2) which is designed to co-operate with the friction surface (3) of another component (4) of the synchronising device, in particular a synchronising intermediate ring,
**characterised in**
**that** the friction surface (2) has an isotropic, smoothly ground surface.

2. A component according to Claim 1, **characterised in that** the roughness height of the surface of the friction surface (2) is between Rₐ = 0 . 1 µm and Rₐ = 0.6 µm .

3. A component according to Claim 2, **characterised in that** the roughness height of the surface of the friction surface (2) is between Rₐ = 0 . 15 µm and Rₐ = 0.4 µm.

4. A method of producing a component (1), in particular a synchronising intermediate ring, for a synchronising device for a transmission, in particular for a motor vehicle transmission, by which a friction surface (2) of the component (1) is treated, which is designed to co-operate with the friction surface (3) of another component (4) of the synchronising device, wherein initially turning of the friction surface (2) and, subsequently, hardening of the friction surface (2) takes place,
**characterised by**
final smooth grinding of the friction surface (2).

5. A method of producing a component (1), in particular a synchronising intermediate ring, for a synchronising device for a transmission, in particular for a motor vehicle transmission, by which a friction surface (2) of the component (1) is treated, which is designed to co-operate with the friction surface (3) of another component (4) of the synchronising device, wherein initially production of the friction surface (2) by deep-drawing and/or stamping and, subsequently, hardening of the friction surface (2) takes place,
**characterised by**
final smooth grinding of the friction surface (2).

6. A method according to Claim 4 or 5, **characterised in that** grinding of the friction surface (2) is carried out between the hardening of the friction surface (2) and the final smooth grinding of the friction surface (2).

7. A method according to any one of Claims 4 to 6, **characterised in that** the smooth grinding is carried out until the roughness height of the surface of the friction surface (2) is between Rₐ = 0.1 µm and Rₐ = 0.6 µm.

8. A method according to Claim 7, **characterised in that** the smooth grinding is carried out until the roughness height of the surface of the friction surface (2) is between Rₐ = 0.15 µm and Rₐ = 0.4 µm.

9. A method according to any one of Claims 4 or 6 to 8, **characterised in that** the smooth-grinding operation forms the final treatment operation of the friction surface (2) and no further pretreatment operations are carried out other than the turning and hardening.

## Revendications

1. Pièce (1) destinée à un dispositif de synchronisation pour une boîte de vitesses, en particulier une boîte de vitesses de véhicule automobile, qui présente une surface de friction (2) agencée en vue de coopérer avec la surface de friction (3) d'une autre pièce (4) du dispositif de synchronisation, en particulier d'une bague de synchronisation intermédiaire, **caractérisée en ce que** la surface de friction (2) présente une surface isotrope poncée par ponçage vibrant.

2. Pièce selon la revendication 1, **caractérisée en ce que** la profondeur de rugosité de la surface de friction (2) est comprise entre Rₐ = 0,1 µm et Rₐ = 0,6 µm.

3. Pièce selon la revendication 2, **caractérisée en ce que** la profondeur de rugosité de la surface de friction (2) est comprise entre Rₐ = 0,15 µm et Rₐ = 0,4 µm.

4. Procédé de fabrication d'une pièce (1), en particulier d'une bague de synchronisation intermédiaire, destinée à un dispositif de synchronisation pour une boîte de vitesses, en particulier une boîte de vitesses de véhicule automobile, selon lequel on usine une surface de friction (2) de la pièce (1), qui est agencée pour coopérer avec la surface de friction (3) d'une autre pièce (4) du dispositif de synchronisation, où l'on procède d'abord au tournage de la surface de friction (2) puis à la trempe de la surface de friction (2), **caractérisé en ce que** l'opération finale consiste en un ponçage vibrant de la surface de friction (2).

5. Procédé de fabrication d'une pièce (1), en particulier d'une bague de synchronisation intermédiaire, destinée à un dispositif de synchronisation pour une boîte de vitesses, en particulier une boîte de vitesses de véhicule automobile, selon lequel on usine une surface de friction (2) de la pièce (1), qui est agencée pour coopérer avec la surface de friction (3) d'une autre pièce (4) du dispositif de synchronisation, où l'on procède d'abord à la réalisation par emboutissage profond et/ou par découpage de la surface de friction (2) puis à la trempe de la surface de friction (2), **caractérisé en ce que** l'opération finale consiste en un ponçage vibrant de la surface de friction (2).

6. Procédé selon la revendication 4 ou 5, **caractérisé en ce qu'**il comprend une rectification de la surface de friction (2) qui est réalisée entre la trempe de la surface de friction (2) et l'opération finale de ponçage vibrant de la surface de friction (2).

7. Procédé selon une des revendications 4 à 6, **caractérisé en ce que** le ponçage vibrant est effectué jusqu'à ce que la profondeur de rugosité de la surface de friction (2) soit comprise entre Rₐ = 0,1 µm et Rₐ = 0,6 µm.

8. Procédé selon la revendication 7, **caractérisé en ce que** le ponçage vibrant est effectué jusqu'à ce que la profondeur de rugosité de la surface de friction (2) soit comprise entre Rₐ =0,15 µm et Rₐ = 0,4 µm.

9. Procédé selon une des revendications 4 ou 6 à 8, **caractérisé en ce que** l'opération de ponçage vibrant constitue la dernière opération d'usinage de la surface de friction (2) et qu'il n'y a pas d'autres opérations de préusinage en dehors du tournage et de la trempe.
